# EUROPEAN PATENT APPLICATION

(11) **EP 4 607 625 A1**
(43) Date of publication of application: **27.08.2025**
(21) Application number: 25158531.1
(22) Date of filing: 18.02.2025
(51) Int. Cl.: H01M 4/70, H01M 10/04, H01M 10/0525, H01M 10/0585, H01M 4/02

(54) **PREVENTION OF AIR TRAP FORMATION DURING BIPOLAR STACK BATTERY FABRICATION**

(30) Priority: 20.02.2024 US 202463555484 P; 27.01.2025 US 202519037602
(71) Applicant: Lasagna.one Inc., San Jose, CA 95134 (US)
(72) Inventor: Katoh, Yuki, San Jose (US); Lin, Xi, San Jose (US); Ohashi, Akinari, San Jose (US)
(74) Representative: London IP Ltd

(57) **Abstract**

A bipolar stacked battery that prevents air from becoming trapped during formation of the bipolar stacked battery has a plurality of stacked battery cells. An electrically and ionically insulating frame is formed between each of the plurality of stacked battery cells.

## Description

### RELATED APPLLICATIONS

This patent application is related to U.S. Provisional Application No. 63/555,484 filed February 20, 2024, entitled **"PREVENTION OF AIR TRAP FORMATION DURING BIPOLAR STACK BATTERY FABRICATION",** in the names of the same inventors and which is incorporated herein by reference in its entirety.

### TECHNICAL FIELD

This disclosure generally relates to batteries, more particularly, to bipolar stacked batteries and method of formation that prevents air from becoming trapped during the formation of the bipolar stacked batteries.

### BACKGROUND OF THE INVENTION

Electric vehicles (EVs) have become increasingly prevalent in the market as an alternative to traditional internal combustion vehicles, largely due to their environmentally friendly nature and advanced technological features. The operation of electric vehicles heavily relies on their battery systems, which provide the necessary electrical energy to power the motors.

Conventionally, in order to generate sufficient voltage to operate high torque motors in vehicles, a large number of batteries may be connected in series. However, this design has several inherent drawbacks. One drawback, for example, is that the stacking of batteries in series may necessitate a significant number of joint parts. Joint parts not only contribute to a loss of energy density and power density due to volumetric loss, but they may also introduce additional resistance, leading to a decrease in power density. Moreover, joint parts may tend to focus current around the jointed areas, resulting in inhomogeneous temperature and current distribution across the batteries. This may ultimately contribute to the premature degradation of the battery system.

To address these challenges, bipolar batteries have been developed. In these bipolar batteries, a positive electrode and a negative electrode may be arranged on both sides of a collector, significantly reducing the need for joint parts. However, these bipolar batteries come with their own set of problems. Specifically, they may present a risk of shortage: if current collectors from different layers come into contact, the battery cells fail to exhibit the necessary voltage, leading to lower overall voltage. Similarly, if the electrolytes of different battery layers touch, the cells likewise may fail to produce the required voltage.

U.S. Patent Publication U.S. 2015/0255797A1 discloses a method for forming a bipolar battery that covers the edge of battery unit with an insulating polymer to prevent electrical short circuits. The issue with the above method is that this approach still leaves open the risk of delamination or bubble formation at the interface between current collector and electrode (cathode or anode) because of the sealed environment created by polymer insulators.

Therefore, it would be desirable to provide a system and method that overcomes the above.

### SUMMARY OF THE INVENTION

This summary is provided to introduce a selection of concepts in a simplified form that are further described below in the **DETAILED DESCRIPTION OF THE INVENTION.** This summary is not intended to identify key features of the claimed subject matter, nor is it intended to be used as an aid in determining the scope of the claimed subject matter.

In accordance with one embodiment of the present invention, a bipolar stacked battery that prevents air from becoming trapped during formation of the bipolar stacked battery is disclosed. The bipolar stacked battery has a plurality of stacked battery cells. An electrically and ionically insulating frame is formed between each of the plurality of stacked battery cells.

In accordance with one embodiment of the present invention, a method of forming a bipolar stacked battery that prevents air from becoming trapped during formation of the bipolar stacked battery is disclosed. The method comprises forming an electrically and ionically insulating frame between each of the plurality of stacked battery cells of the bipolar stacked battery.

In accordance with one embodiment of the present invention, a bipolar stacked battery that prevents air from becoming trapped during formation of the bipolar stacked battery is disclosed. The bipolar stacked battery has a plurality of stacked battery cells. An electrically and ionically insulating frame is formed between each of the plurality of stacked battery cells. The insulating frame is positioned in each of the plurality of stacked battery cells so that at least one edge in each of the plurality of stacked battery cells is open so as not to completely seal each of the plurality of stacked battery cells. A separator and an inner edge of the insulating frame of a respective stacked battery cell are similar in shape. An area made by an outer edge of the insulating frame (S_{f,outer}) is greater than or equal to the area of a current collector (S_{cc}), which satisfies 1 ≤ (S_{f,outer}/S_{cc}) for a respective stacked battery cell. An area made by an inner edge of the insulating frame (S_{f,inner}) and an area of a separator (Sₛₑₚ) of a respective stacked battery cell satisfy 0.8 ≤ (S_{f,inner} / Sₛₑₚ) ≤ 1.43, wherein a thickness (T) of each respective stacked battery cell of the plurality of stacked battery cells, and the thickness of the insulating frame (t) satisfy 0.05 ≤ (t / T) ≤ 1.22.

### BRIEF DESCRIPTION OF THE DRAWINGS

The present application is further detailed with respect to the following drawings. These figures are not intended to limit the scope of the present application but rather illustrate certain attributes thereof. The same reference numbers will be used throughout the drawings to refer to the same or like parts.
FIG. 1A shows a cross-sectional side view of an exemplary bipolar stacked battery in accordance with an embodiment of the disclosure;
FIG. 1B is an exploded view of an exemplary battery cell of the bipolar stacked battery of FIG. 1A in accordance with an embodiment of the disclosure;
FIG. 2 shows a cross-sectional side view of an exemplary bipolar stacked battery in accordance with an embodiment of the disclosure;
FIG. 3 is a magnified cross-sectional view of an exemplary battery cell of the bipolar stacked battery of FIG. 1A in accordance with an embodiment of the disclosure; and

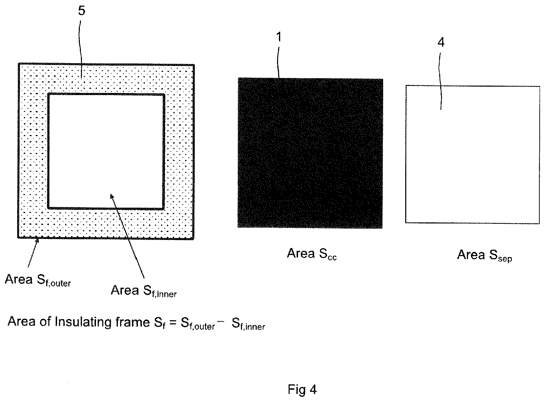

FIG. 4 is another exploded view of an exemplary battery cell of the bipolar stacked battery of FIG. 1A in accordance with an embodiment of the disclosure.

### DETAILED DESCRIPTION OF THE INVENTION

The description set forth below is intended as a description of presently preferred embodiments of the disclosure and is not intended to represent the only forms in which the present disclosure can be constructed and/or utilized. The description sets forth the functions and the sequence of steps for constructing and operating the disclosure. It is to be understood, however, that the same or equivalent functions and sequences can be accomplished by different embodiments that are also intended to be encompassed within the spirit and scope of this disclosure.

This patent application proposes a system and method for forming bipolar stacked battery cells. The bipolar stacked battery cell may have an electrically and ionically insulating frame. The insulating frame may be either free standing or stuck on the one side of a current collector, but not both side (top 'and' bottom) of the current collectors. The edge of the bipolar stack battery cell may not be fully sealed. The insulator may not seal the edge of the bipolar stacked cell. This may enable one to avoid trapping air bubbles in the stack during the manufacturing process and therefore may lead to the improved cell performance.

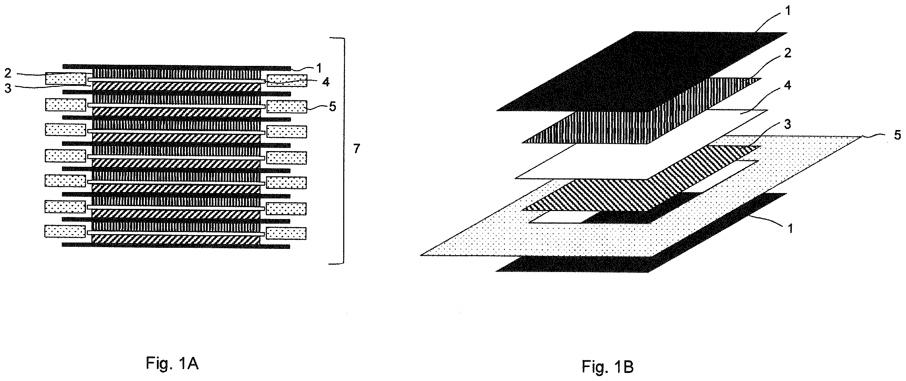

Referring to Figs. 1A-1B a stacked bipolar battery cell 7 (hereinafter stacked cell 7) may be shown. In the direction from high voltage side to low voltage, the stacked cell 7 may be formed of a layer of current collector 1, cathode layer 2, separator 4, anode layer 3. This formation may be repeated such that the stacked cell 7 may have layer formations of 1, 2, 4, 3, 1, 2, .... 2, 4, 3, 1. As may be shown in Figs. 1A-1B, an insulating frame 5 may be sandwiched by current collector 1 together with the stack of cathode layer 2, separator 4 and anode layer 3. The insulating frame 5 may not have conductivity of electrons or ions. As may be shown in Figs. 1A-1B, the insulating frame 5 may cover the edge of the current collector 1, cathode layer 2, anode layer 3, and separator 4. Namely, none of the layers may be contacting to other layers in-between electric stacks.

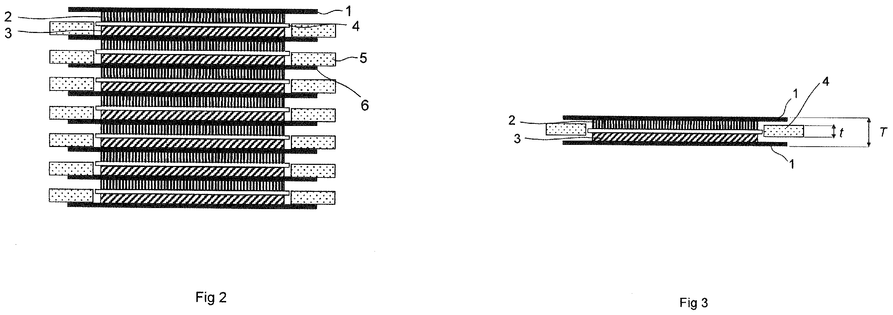

To avoid gas from being trapped in the stack cell 7, especially at the interface between current collector 1 and cathode layer 2 (or anode layer 3), the insulating frame 5 should not completely seal the edge of the stack cell 7. The insulating frame 5 may be a free-standing frame. Also, the insulating frame 5 can equip adhesive on one side of its surface and can be attached to the current collector 1 as may be shown in Fig. 2. When the insulating frame 5 is attached to one of the interior current collectors 1, the current collectors 1 at the top and bottom of the stack cell 7 will not both have the insulating frame 5 attached thereto.

The components of the stacked cell 7 may need to satisfy certain conditions to avoid severe deformation of the current corrector 1 during the fabrication process of the stacked cell 7. Referring to Fig. 3, one may define the stack thickness (T) as the sum of the thickness of the current collector 1 + cathode layer 2 + separator 4 + anode layer 3 + current collector 1. The stack thickness T should satisfy the relationship with the thickness of the insulating frame 5 (t) as 0.05 ≤ (t / T) ≤ 1.22.

The area of the separator 4 should be larger than the cathode layer 2 and anode layer 3. The area (S_{f,outer}) made by outer edge of the insulating frame 5 may be the same as or larger than the area (S_{cc}) of current collectors. Namely, 1 ≤ (S_{f,outer} / S_{cc}).

The area (S_{f,inner}) made by inner edge of the insulating frame 5 and the area (Sₛₑₚ) of the separator 4 can satisfy 0.8 ≤ (S_{f,inner} / Sₛₑₚ) ≤ 1.43.

The current collector 1 may be composed of metal foil, a metal mesh, or similar types of materials. In accordance with an embodiment, a metal foil may be used. Examples of metal constituting the current collector 1 may include, but is not limited to: Cu, Ni, Cr, Au, Pt, Ag, Au, Al, Fe, Ti, Zn, Co, and stainless steel. The material may be a pure metal element, doped, alloy or clad. The surface of the metal may also be covered with carbon or other material. This may help to ensure good adhesion with the cathode layer 2 and anode layer 3. In addition to metal, carbon can also be used for the current collector 1. Resin composites with an electron conductor (metal or carbon or metal coated plastic) as filler may be used for the current collector 1. Possible carbon filler materials may include, but is not limited to: acetylene black (AB), Ketjen black (KB), VGCF, carbon nanotubes, carbon nanohorns, graphite, needle-like graphite, and fullerenes. Possible filler metals may include, but is not limited to: stainless steel, Cu, Ni, Cr, Au, Pt, Ag, Au, Al, Fe, Ti, Zn, Co. The shape of the filler may be spherical, fibrous, needle-like, hollow, or similar shapes. When needle or fiber-shaped fillers are used, it may be effective to make the fillers oriented. This is because the orientation controls the flow of electrons and makes it easier to interrupt the current in the event of an abnormality.

The thickness of the current collector 1 is not specifically limited. In accordance with an embodiment, the thickness of the current collector 1 may be between 0.1 um to 1 mm, and, more specifically, between 1 um to 50 um.

The cathode layer 2 may be a layer that may contain at least a cathode active material (CAM). Examples of the CAM may include, but is not limited to: layered lithium containing oxide materials, such as LiCoO₂, LiMnO₂, LiNiO₂, LiNiₓMn_{y}Co_{1-x-y}O₂, LiNiₓCo_{y}Al_{1-x-y}O₂, lithium containing phosphate with olivine structure, such as LiFePO₄, LiFeₓMn₁₋ₓPO₄, LiMnPO₄, LiFeₓCo₁₋ₓPO₄, LiCoPO₄, lithium containing oxide materials with spinel structure, such as LiNi_{0.5}Mn_{1.5}O₄, LiMn₂O₄, lithium excess layered structured oxide, such as Li₂MnO₃, Li₂RuO₃, Li₂RuₓTi₁₋ₓO₃, Li₂RuₓSn₁₋ₓO₃, Li₂MnₓTi₁₋ₓO₃, Li₂MnₓSn₁₋ₓO₃, layered lithium containing sulfide materials, such as TiS₂, MoS₂, NbS₂, TaS₂, Sulfur, or lithium containing sulfide with Chevrel structure, such as LiCuₓMoS_{1-z}.

The surface of CAM may be coated by thin layer of materials (Coating). Examples of the coating material may include, but is not limited to: crystalline phase, such as Li₂ZrO₃, LiNbO₃, LiPO₃, Li₃PO₄, LiTi₂(PO₄)₃, LiZr(PO₄)₃, ZrO₂, Al₂O₃, EtOLi, MtOLi, LiOH, Li₂CO₃ and/or amorphous phase, such as metal alkoxide, metal phosphate.

Cathode layer 2 may further contain solid electrolytes, binders, electron conductive additives, in addition to CAM. Examples of electrolyte may include, but is not limited to: organic liquid, organic polymer, inorganic solids. In accordance with an embodiment, the electrolyte may be inorganic solids because of higher transference number of lithium compared to liquid and higher ionic conductivity than organic polymer. This may be because inorganic solids are usually rigid and do not show liquidity which is preferred to compose Stacked Cell 13 without ionic shorting.

In accordance with an embodiment, examples of electrolytes may include, but is not limited to: materials having composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-OX' (X' is F, Cl, Br or combination of those), Li-B-H, Li-B-N-H, Li-B-H-O, Li-B-N-H-O, Li-M"-X" (M is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

Examples of a binder that may be contained in the cathode layer 2 may include, but is not limited to: butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

In addition, the cathode layer 2 may contain an electron conductive additive. For example, various types of carbon which may include acetylene black (AB), Ketjen black (KB), VGCF, carbon nanotubes, carbon nanohorns, graphite, needle-like graphite, and fullerenes may be used.

The thickness of the cathode layer 2 is not specifically limited, but a thicker layer may be preferred when higher capacity is required. For example, in accordance with an embodiment, the thickness of the cathode layer 2 may be 0.1 um to 1 mm, and is more preferably 60 um to 500 um.

The anode layer 3 is a layer that may contain at least an anode active material (AAM). Examples of the AAM may include, but is not limited to: layered lithium containing sulfide materials, such as TiS₂, MoS₂, NbS₂, TaS₂, titanium containing oxides, such as, Li₄Ti₅O₁₂, TiₓNb_{y}O_{z}, LiₓTi₂(PO₄)₃, tungsten containing oxides, such as Nb₁₆W₅O₅₅, Nb₁₈W₁₆O₉₃, vanadium containing oxide, such as LiVO₂, Artificial carbon (or hard carbon), Graphite, Li-metal alloy, such as LiₓIn, LiₓSn, LiₓSi, LiₓGe, LiₓAl, or metallic lithium.

The anode layer 3 may further contain solid electrolytes, binders, electron conductive additives, in addition to AAM.

Examples of electrolytes may include, but is not limited to: organic liquid, organic polymer, inorganic solids. In accordance with an embodiment, the electrolyte are inorganic solids because of the higher transference number of lithium compared to liquid and the higher ionic conductivity than organic polymer. This is because inorganic solids are usually rigid and do not show liquidity which may be preferred to compose the stacked cell 7 without ionic shorting.

In accordance with an embodiment, examples of the electrolyte may include, but is not limited to: materials that may have the composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, LiM"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

Examples of a binder that may be contained in the anode layer 3 may include, but is not limited to: butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

In addition, the anode layer 3 may contain electron conductive additives. For example, various types of carbon that may include acetylene black (AB), Ketjen black (KB), VGCF, carbon nanotubes, carbon nanohorns, graphite, needle-like graphite, and fullerenes may be used.

The thickness of the anode layer 3 is not specifically limited, but a thicker layer may be preferred when higher capacity is required.

The separator 4 is an electron insulator and an ionic conductor. The electrolyte can be either organic liquid, organic polymer or inorganic solid. If an organic based electrolyte (liquid or polymer) is chosen, the separator 4 may be a porous membrane consisting of polymers such as Polyethylene (PE), Polypropylene (PP) and combination of those. The membrane is immersed by organic based electrolyte.

In accordance with an embodiment, the separator 4 may consist of inorganic solids because of the higher transference number of lithium compared to liquid and the higher ionic conductivity than organic polymer. This may be because the inorganic solids are usually rigid and do not show liquidity which may be preferred to compose the stacked cell 7 without ionic shorting.

Examples of the electrolytes may include, but is not limited to: organic liquid, organic polymer, inorganic solids. In accordance with an embodiment, the electrolyte is an inorganic solid because of the higher transference number of lithium compared to liquid and higher ionic conductivity than organic polymer. This may be because the inorganic solids are usually rigid and do not show liquidity which is preferred to compose the stacked cell 7 without ionic shorting.

Examples of the electrolyte may include, but is not limited to: materials that have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The solid electrolyte layer may contain a binder in addition to the above-mentioned solid electrolyte material. Examples of a binder that may be contained in the cathode layer 2 may include, but is not limited to: butadiene rubber (BR), butyl rubber (IIR), acrylate butadiene rubber (ABR), polyvinylidene difluoride (PVDF), and Polytetrafluoroethylene (PTFE). Side chains of the binder may be modified by functional groups.

The thickness of the separator 4 is not specifically limited, but a thinner layer may be preferred when higher capacity is required. For example, the thickness of the separator 4 may be 0.1 um to 1 mm, and more specifically 0.1um to 50 um.

The insulating frame 5 may be made to enhance the insulation between layers and thus enable the stacked cell 7 to exhibit high voltage. It may be intricately placed between the current collector 1, separating both its longer and shorter sides meticulously. Its presence is to ensure that any surface area of the current collector 1, which remains unoccupied by the cathode layers 2 or anode layers 3, may be fully insulated. The insulating frame 5 does not need to be sticking to any component of the stacked cell 7 but may be stacked on one side of the current collector 1 as shown in Fig 2. It is important that in the case where the insulating frame 5 equips adhesive or sticky feature on its surface, the insulating frame 5 should not completely seal the edge of the stacked cell 7 to avoid air trapped at the interface of each layer.

In terms of its electrical properties, the insulating frame 5 may be built to be an exceptional insulator. Its electric conductivity should fall below 10⁻⁸ S/cm, with a stricter and more desirable threshold being below 10⁻¹⁰ S/cm. This may ensure that the insulator frame 5 performs at its optimum, providing maximum protection against any undesirable electrical currents.

The position of the insulating frame 5 is not bound by stringent restrictions. The guiding principle is that the current collector 1 should be comprehensively shielded. In practical terms, this might mean that the insulating frame 5 could grace both sides of the current collector 1 - one side that faces the cathode layer 2 and the other that faces the anode layer 3.

While the exact area of the insulating frame 5 on the surface of the current collector 1 surface isn't strictly defined, it's desirable for it to sufficiently cover any regions left exposed from the edge of the electrode active material layer. The key is for it to insulate the surface of the current collector 1 electronically. Yet, it's important to avoid the formation of the insulating frame 5 on either the cathode layer 2 or the anode layer 3. Such a placement could be problematic during the bonding process when creating the stacked cells 7. Overlaps between the electrode and insulating frame could create regions of uneven pressure. Such disparities in pressure could damage the current collector or even the separator 4.

The gap or distance between the cathode layer 2 and the insulating frame 5 may be denoted as width (r) of the bare surface of the current collector 1, should be calibrated to ensure insulation between layers. It is not limited by rigid parameters, but the width r should ideally span a range from 0.0001 % to 10% of the square root of S, where S represents the area of the cathode layer 2, measured in cm². This may ensure a balanced design, offering optimum insulation while maintaining the structural integrity and performance of the stacked cell 7. The gap or distance criteria between the cathode layer 2 and the insulating frame 5 may be applicable to those between the anode layer 3 and the insulator 5.

The materials used for the insulating frame 5 is not limited to specific materials. The materials used for the insulating frame 5 should have the required capability for insulation. Examples of materials for the insulating frame 5 may include, but is not limited to: Acrylic, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE); Ethylene tetrafluoroethylene (ETFE); Fluorinated ethylene propylene (FEP); Silicon Rubber; epoxy films.

In the case where the insulating frame 5 needs to be stacked on the surface of the current collector 1, one can use an adhesive 6. The adhesive 6 should be an exceptional insulator. Its electric conductivity should fall below 10⁻⁸ S/cm, with a stricter and more desirable threshold being below 10⁻¹⁰ S/cm. This may ensure that the insulator frame 5 performs at its optimum, providing maximum protection against any undesirable electrical currents.

The area of the adhesive 6 is not bound by stringent restrictions. The guiding principle is that the adhesive 6 should not seal completely the edge of stacked cell 7. Namely, as long as the gas in the volume between current collector 1 can be escaped, the adhesive 6 can be placed on any surface of the insulating frame 5.

The materials used for the adhesive 6 is not limited to specific materials as long as the material has the required capability for insulation. Examples of the adhesive 6 may include, but are not limited to: Acrylic, such as polyvinyl acetate (PVA); epoxy adhesives (EA); Polyurethane adhesives (PA); cyanoacrylate adhesives (CA); Hot melt adhesives (HMA); pressure-sensitive adhesives, etc.

### Example 1: Bubble trap testing

The stacked cells 7 were fabricated with different kind of insulating frames 5 and checked the surface of current collector 1 after the fabrication to see if there is the bubble trapped. Cathode layer fabrication.

The cathode layer 2 used in the example was fabricated. The powder of cathode active material (LiNi_{1/3}Co_{1/3}Mn_{1/3}O₂, MTI corporation), solid electrolyte (SSE-10, NEI) and PTFE (Daikin America) were mixed in the ratio of 87:12:1 (wt%). Then the mixture was extended to the sheet with the thickness 370um to form the cathode layer 2.

### Anode layer fabrication.

The anode layer 3 used in the example was fabricated. The powder of anode active material (Li₄Ti₅O₁₂, MSE supplies LLC), solid electrolyte (SSE-10, NEI), carbon black (C45, Imerys) and PTFE (Daikin America) were mixed in the ratio of 80:15:1:4 (wt%). Then the mixture was extended to the sheet with the thickness 600um to form the anode layer 3.

### Separator fabrication.

The separator 4 used in the example was fabricated. The powder of solid electrolyte (SSE-10, NEI) and PTFE (Daikin America) were mixed in the ratio of 97:3 (wt%). Then the mixture was extended to the sheet with the thickness 150um to form the separator 4.

### The Bipolar Stacked Cell fabrication.

The stacked cells 7 were fabricated with stacking the unit cell consisted with Al foil (34mm Diameter), anode layer 3 (28mm Diameter), separator 4 (30mm Diameter), cathode layer 2 (22mm Diameter) and Al foil (34mm Diameter). The unit cell was equipped with a ring shape-insulating frame 5 (ID=30.6mm, OD=34mm) in between Al foil. The materials of the insulating frame 5 are listed in the table 1 below. Then the three unit cells were stacked together and compressed by uniaxial press with the force of 30 ton.

### Results.

The quality of the stacked cell 7 was investigated with the observation if the bubble is trapped between current collector 1 and the cathode layer 2 or anode layer 3. The results of investigation are listed in Table 1 below.

If the insulating frame 5 has adhesive 6 and seals the edge of the stacked cells 7, the bubble was found on the stacked cell 7. But when the frames are NOT sealed, the stack cells 7 did not have any bubble.

**Table 1**

| Frame Material | Frame thickness | Adhesive Material | Adhesive thickness | Edge Sealing | Bubble at current collector/cathode (or anode) layer |
|---|---|---|---|---|---|
| PTFE | 0.3mm | no | n/a | No | No bubble |
| PTFE | 0.3mm | PIB (one side) | 0.03mm | No | No bubble |
| PTFE | 0.6mm | PIB (both side) | 0.03mm | Sealed | Bubble exists on both Anode and Cathode side |

### Example 2: Current Collector deformation and shorting testing

The cathode layer 2, anode layer 3, and separator 4 were fabricated as same procedure as in Example 1. The dimension of the insulating frame 5 were changed for pressing as shown in Table 2 below. After the same densification procedure as in Example 1, the prepared stack cells 7 were investigated by eye observation to see the deformation of the current collectors 1 and open circuit voltage measurement without charging to see the shorting.

**Table 2.**

| T / mm | t / mm | Sₛₑₚ / cm² | S_{cc} / cm² | S_{f, outer} / cm² | S_{f, inner} / cm² | t / T | S_{f,outer} / S_{cc} | S_{f,inner} / Sₛₑₚ | Deformation of Current Collector | Short |
|---|---|---|---|---|---|---|---|---|---|---|
| 409 | 100 | 7.07 | 9.07 | 9.07 | 7.08 | 0.24 | 1.00 | 1.00 | No severe deformation | Not shorted |
| 408 | 300 | 7.07 | 9.07 | 9.07 | 7.08 | 0.74 | 1.00 | 1.00 | No severe deformation | Not shorted |
| 409 | 300 | 6.15 | 9.07 | 9.07 | 7.08 | 0.74 | 1.00 | 1.15 | No severe deformation | Not shorted |
| 407 | 300 | 4.91 | 9.07 | 9.07 | 7.08 | 1.22 | 1.00 | 1.43 | Mode 1 | Shorted |
| 409 | 500 | 7.07 | 9.07 | 9.07 | 7.08 | 1.22 | 1.00 | 1.00 | Mode 2 | Shorted |
| 610 | 30 | 7.07 | 9.07 | 9.07 | 7.08 | 0.05 | 1.00 | 1.00 | Mode 3 | Shorted |
| 408 | 300 | 7.07 | 10.2 | 9.07 | 7.08 | 0.74 | 0.89 | 1.00 | Mode 4 | Shorted |
| 408 | 100 | 8.04 | 9.07 | 9.07 | 7.08 | 0.24 | 1 | 0.88 | No severe deformation | Not shorted |
| 410 | 300 | 8.04 | 9.07 | 9.07 | 7.08 | 0.73 | 1 | 0.88 | No severe deformation | Not shorted |
| 601 | 300 | 7.07 | 9.07 | 9.07 | 7.08 | 0.5 | 1 | 1 | No severe deformation | Not shorted |
| 547 | 300 | 7.07 | 8.04 | 9.07 | 6.16 | 0.55 | 1.13 | 0.87 | No severe deformation | Not shorted |

Mode 1: The current collector 1 was bent and inserted into the gap between the separator 4 and the inner edge of insulating frame 5. As a result, the stacked cell 7 was shorted.

Mode 2: The current collector 1 was buckled up because of the deformation of the insulating frame 5 during the densification process. The current collectors 1 touched each other at the edge of the stacked cell 7 leading to shorting.

Mode 3: The insulating frame 5 was too thin and loose. Under such situation, the position of the insulating frame 5 was not well defined (can move almost freely). As a result, the current collectors 1 touched each other at the position where the insulating frame 5 should exist.

Mode 4: The current collector 1 was bent at the edge of the insulating frame 5 and touch each other.

The above disclosure provides a method of preventing air from becoming trapped during the formation of bipolar batteries. The above discloses:
1. Bipolar stacked batteries having electrically and ionically insulating frame.
2. The edge of the bipolar stack is NOT fully sealed.
3. The insulating frame can be either free standing or stuck on the one side of current collector, but not both side (top 'and' bottom) of the current collector.
4. The shape of each layer is not specified. For example, they may be circular, square, rectangular, hexagonal, trapezoidal, or otherwise.
5. The separator and inner edge of the insulating frame must be similar in shape, but the other layers do not necessarily have to be similar in shape.
6. The area of separator is larger than cathode layer and that of anode layer.
7. The area made by outer edge of the insulating frame (S_{f,outer}) is the same as or larger than the area of current collectors (S_{cc}). Namely, 1 ≤ (S_{f,outer} / S_{cc}).
8. The area made by inner edge of the insulating frame (S_{f,inner}) and the area of the separator (Sₛₑₚ)
   satisfy 0.8 ≤ (S_{f,inner} / Sₛₑₚ) ≤ 1.43
9. The thickness of unit stack [Current Collector + Cathode layer + Separator + Anode layer + Current Collector] (T) and the thickness of the insulating frame (t) satisfy 0.05 ≤ (t / T) ≤ 1.22

- 1 - 3 may be important to avoid forming the bubble trapped at the interface of the current collector 1 and cathode layer 2 or anode layer 3.
- 4 - 9 may be important to avoid the significant deformation of the current collector during densification step in the fabrication process. Such significant deformation can cause a short.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public.

## Claims

1. A bipolar stacked battery that prevents air from becoming trapped during formation of the bipolar stacked battery comprising:
a plurality of stacked battery cells; and
an electrically and ionically insulating frame formed between each of the plurality of stacked battery cells.

2. The bipolar stacked battery of Claim 1, wherein the insulating frame is positioned in each of the plurality of stacked battery cells so that at least one edge in each of the plurality of stacked battery cells is open so as not to completely seal each of the plurality of stacked battery cells.

3. The bipolar stacked battery of any preceding claim, wherein the insulating frame is free standing between each of the plurality of stacked battery cells.

4. The bipolar stacked battery of Claim 1 or 2, wherein the insulating frame is attached to only one current collector between adjacent stacked battery cells.

5. The bipolar stacked battery of any preceding claim, wherein a separator and an inner edge of the insulating frame of a respective stacked battery cell are similar in shape.

6. The bipolar stacked battery of any preceding claim, wherein a separator and an inner edge of the insulating frame of a respective stacked battery cell are similar in shape but remaining components of the respective stacked battery cell are not similar in shape.

7. The bipolar stacked battery of any preceding claim, wherein an area of a separator is larger than an area of a cathode layer and an area of an anode layer of a respective stacked battery cell.

8. The bipolar stacked battery of any preceding claim, wherein an area made by an outer edge of the insulating frame (S_{f,outer}) is greater than or equal to the area of a current collector (S_{cc}), which satisfies 1 ≤ (S_{f,outer}/S_{cc}) for a respective stacked battery cell.

9. The bipolar stacked battery of any preceding claim, wherein an area made by an inner edge of the insulating frame (S_{f,inner}) and an area of a separator (Sₛₑₚ) of a respective stacked battery cell satisfy 0.8 ≤ (S_{f,inner} / Sₛₑₚ) ≤ 1.43.

10. The bipolar stacked battery of any preceding claim, wherein a thickness (T) of each respective stacked battery cell of the plurality of stacked battery cells, and the thickness of the insulating frame (t) satisfy 0.05 ≤ (t / T) ≤ 1.22.

11. The bipolar stacked battery of any preceding claim wherein a thickness (T) of each respective stacked battery cell of the plurality of stacked battery cells, and the thickness of the insulating frame (t) satisfy 0.05 ≤ (t / T) ≤ 1.22, the thickness (T) being equal to a thickness of a Current Collector + a thickness of a Cathode Layer + a thickness of a Separator + a thickness of an Anode Layer + a thickness of a Current Collector of a respective stacked battery.

12. A method of forming a bipolar stacked battery that prevents air from becoming trapped during formation of the bipolar stacked battery comprising:
forming an electrically and ionically insulating frame between each of the plurality of stacked battery cells of the bipolar stacked battery.

13. The method of claim 13 comprising providing the battery with the features of any of claims 2 to 11.
